(19) Europäisches Patentamt
European Patent Office
Office européen des brevets

(11) **EP 4 636 004 A1**

(12) **EUROPEAN PATENT APPLICATION**
published in accordance with Art. 153(4) EPC

(43) Date of publication:
**22.10.2025 Bulletin 2025/43**

(21) Application number: 23903210.5

(22) Date of filing: **18.11.2023**

(51) International Patent Classification (IPC):
*C08G 18/79* (2006.01)    *C08G 18/08* (2006.01)
*C08G 18/28* (2006.01)    *C08G 18/36* (2006.01)
*C08G 18/72* (2006.01)    *D06N 3/14* (2006.01)

(52) Cooperative Patent Classification (CPC):
**C08G 18/08; C08G 18/28; C08G 18/36;
C08G 18/72; C08G 18/79; D06N 3/14**

(86) International application number:
**PCT/JP2023/041553**

(87) International publication number:
**WO 2024/127913 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 JP 2022200654**

(71) Applicant: Seiren Co., Ltd.
**Fukui-shi
Fukui 918-8560 (JP)**

(72) Inventors:
• **KOBAYASHI, Taiyo
Fukui-shi, Fukui 918-8560 (JP)**
• **GOTO, Motoshi
Fukui-shi, Fukui 918-8560 (JP)**

(74) Representative: **Hoffmann Eitle
Patent- und Rechtsanwälte PartmbB
Arabellastraße 30
81925 München (DE)**

(54) **FLAME RETARDANT POLYURETHANE RESIN COMPOSITION AND SYNTHETIC ARTIFICIAL LEATHER USING SAME**

(57)    [Problem] The present invention addresses the problem of providing: a polyurethane resin composition which has excellent flame retardancy and flexibility, while being reduced in the amount of an added flame retardant; and a synthetic artificial leather which is formed of this polyurethane resin composition. [Solution] A polyurethane resin composition which contains a flame retardant and a reaction product of a polyurethane resin starting material component containing a polyisocyanate compound and a polyol compound, wherein a modified isocyanurate type polyisocyanate component having an average of 1.7 to 2.3 isocyanate groups is used as the polyisocyanate compound. A synthetic artificial leather which is obtained by forming, on a supporting body such as a fiber fabric, a surface skin layer with use of the thus-obtained flame retardant polyurethane resin composition.

EP 4 636 004 A1

## Description

## Technical Field

The present invention relates to a novel flame-retardant polyurethane resin composition having excellent flame retardancy and flexibility, and a synthetic artificial leather using the same.

The present invention further relates to a flame-retardant polyurethane resin composition having a high biomass ratio using plant-derived components.

## Background Art

A synthetic artificial leather using a polyurethane resin is widely used as an automobile seat material. Polyurethane resins for such applications generally are required to have high flexibility and frame retardancy.

As a method for imparting flame retardancy to a polyurethane resin, a method of blending a flame retardant is well known. For example, Patent Document 1 discloses a method of incorporating a liquid flame retardant such as a phosphoric acid ester.

However, when a liquid flame retardant is used, a phenomenon known as "bleeding" in which the flame retardant oozes out from a product may occur depending on the use environment. When used in automobile seat materials, the bled flame retardant may evaporate, causing the automobile glass to become cloudy. There is also a method of blending solid flame retardants, but the resulting polyurethane resin tends to become hard. In addition, these flame retardants are required to be mixed in such a very large amount that several tens of percent with respect to the amount of the polyurethane resin.

It is already known that a flame-retardant polyurethane resin can be obtained by using a polyisocyanate component of isocyanurate forms (see Patent Documents 2 to 6, for example).

However, polyurethane resins using a relatively large amount of polyfunctional isocyanate components such as isocyanurates tend to increase in hardness, and are generally used as a hard board for building materials or the like. It may not be suitable for materials that require relatively high flexibility such as automobile seat materials.

In recent years, many biomass polyurethane resins obtained by using plant-derived polyol components have been developed. It has also been proposed to obtain polyurethane resins with a higher biomass ratio by using plant-derived polyisocyanate components as well (see Patent Documents 7 to 12).

In the course of extensive investigations for contributing to carbon neutrality which aims at global warming countermeasures and environmental load reduction, the inventors also noticed that an environmentally friendly flame-retardant biomass polyurethane resin can be obtained by using an isocyanurate compound formed by trimerizing plant-derived pentamethylene diisocyanate.

It is known that isocyanurate-type polyisocyanates can be modified by reacting with short-chain monools or the like (Patent Document 13). However, it is not known that a polyurethane resin having a good balance between flame retardancy and flexibility can be obtained by using the same.

## Prior Art Documents

## Patent Document

Patent Document 1: Jpn. Pat. Kokai (unexamined laid-open publication) No. 2022-056074
Patent Document 2: Jpn. Pat. Kokai No. 2019-090038
Patent Document 3: International Publication No. WO2016/010042
Patent Document 4: Jpn. Pat. Kokai No. 2022-022919
Patent Document 5: Jpn. Pat. Kokai No. 2020-063410
Patent Document 6: Jpn. Pat. Kokai No. 2017-043667
Patent Document 7: Jpn. Pat. Kokai No. 2011-226047
Patent Document 8: Jpn. Pat. Kokai No. 2019-199498
Patent Document 9: Jpn. Pat. Kokai No. 2019-199499
Patent Document 10: International Publication No. WO2019/221090
Patent Document 11: Jpn. Pat. Kokai No. 2011-241528
Patent Document 12: International Publication No. WO2015/011921
Patent Document 13: Jpn. Pat. Kokai No. 2008-101087

## Disclosure of the Invention

### Problems to be Solved by the Invention

It is an object of the present invention to provide a polyurethane resin product which is excellent in flexibility, flame retardancy, and free from bleeding problems.

### Means for Solving the Problems

As a result of intensive research, the present inventors have found that it is possible to improve both flexibility and flame retardancy by using a modified isocyanurate-type polyisocyanate compound having a specific number of isocyanate groups, which is obtained by blocking at least one of the functional groups (isocyanate groups) contained in isocyanurate-type polyisocyanate with a monool or the like, as at least a part of the polyisocyanate component of polyurethane resin raw material components, and have thus completed the present invention.

That is, the present invention relates to the following flame-retardant polyurethane resin composition, a flame-retardant polyurethane resin formulation, a synthetic artificial leather, and a method for producing the same.

(1) A flame-retardant polyurethane resin composition which comprises a flame retardant and a reaction product of polyurethane resin raw material components containing a polyisocyanate component and a polyol component, wherein said polyisocyanate component comprises a modified isocyanurate-type polyisocyanate compound having an average number of isocyanate groups of 1.7 to 2.3.

(2) The flame-retardant polyurethane resin composition according to (1), wherein the content of said flame retardant is 15% by mass or less with respect to the total amount of the flame-retardant polyurethane resin composition.

(3) The flame-retardant polyurethane resin composition according to (1), wherein said modified isocyanurate-type polyisocyanate compound contains a partially blocked isocyanurate-type polyisocyanate in which at least one of the isocyanate groups of the isocyanurate-type polyisocyanate is blocked with a monool.

(4) The flame-retardant polyurethane resin composition according to (3), wherein said monool is selected from the group consisting of monools having 6 to 12 carbon atoms and monools derived from castor oil.

(5) The flame-retardant polyurethane resin composition according to (1), wherein the content of said modified isocyanurate-type polyisocyanate compound is in the range of 60 to 100% by mass with respect to the total amount of the polyisocyanate component.

(6) The flame-retardant polyurethane resin composition according to (1), wherein said polyisocyanate component further comprises a diisocyanate compound.

(7) The flame-retardant polyurethane resin composition according to (6), wherein the ratio of the diisocyanate compound (a) to the modified isocyanurate-type polyisocyanate compound (b) in the polyisocyanate component is in the range of (a): (b) = 1:99 to 40:60 (molar ratio).

(8) The flame-retardant polyurethane resin composition according to (1), wherein the content of said modified isocyanurate-type polyisocyanate compound is 3 parts by mass or more per 100 parts by mass of the flame-retardant polyurethane resin composition.

(9) The flame-retardant polyurethane resin composition according to (1), wherein said polyisocyanate component comprises a modified isocyanurate-type polyisocyanate compound derived from plant-derived 1,5-pentamethylene diisocyanate.

(10) The flame-retardant polyurethane resin composition according to (1), wherein said polyol component comprises a plant-derived polyol compound.

(11) A flame-retardant polyurethane resin formulation for forming the flame-retardant polyurethane resin composition according to (1), which comprises a flame retardant and polyurethane resin raw material components containing a polyisocyanate component and a polyol component, wherein said polyisocyanate component comprises a modified isocyanurate-type polyisocyanate compound having an average number of isocyanate groups of 1.7 to 2.3.

(12) The flame-retardant polyurethane resin formulation according to (11), in which the content of the flame retardant is 15% by mass or less with respect to the total amount of the flame-retardant polyurethane resin formulation.

(13) A synthetic artificial leather comprising a support body and a surface skin layer, wherein at least the surface skin layer is composed of the flame-retardant polyurethane resin composition according to any one of (1) to (10).

(14) The synthetic artificial leather according to (13), which is a vehicle interior material.

(15) A method for producing a synthetic artificial leather comprising a support body and a surface skin layer, which comprises a process for forming a surface skin layer by laminating the flame-retardant polyurethane resin formulation according to (11) or (12) on the support body followed by heat treating.

**Effect of the Invention**

The flame-retardant polyurethane resin composition of the present invention has high flame retardancy using a specific polyisocyanate compound comprised in the polyurethane resin itself. Therefore, the content of flame retardants can be reduced to a low content. In addition, since the flame-retardant polyurethane resin composition does not become too hard, a material having sufficient flexibility can be provided.

As a result, a polyurethane resin composition excellent in flexibility and flame retardancy and free from occurrence of bleeding problems can be obtained. It can be suitably used for a synthetic artificial leather such as a synthetic leather and an artificial leather having both flexibility and flame retardancy, such as automobile seat materials.

The present invention also provides a synthetic artificial leather made from an environmentally friendly polyurethane resin material capable of not only having flexibility and flame retardancy but also having a high biomass ratio, by using a specific plant-derived polyisocyanate component and a polyol component as raw material components of the polyurethane resin.

**Modes for Carrying Out the Invention**

1. Flame-retardant Polyurethane Resin Composition

The flame-retardant polyurethane resin composition of the present invention comprises a flame retardant and a reaction product of polyurethane resin raw material components containing a polyisocyanate component and a polyol component, wherein said polyisocyanate component comprises a modified isocyanurate-type polyisocyanate compound having an average number of isocyanate groups of 1.7 to 2.3.

(1) Isocyanurate-type polyisocyanate

The above-described modified isocyanurate-type polyisocyanate compound is a compound obtained by modifying isocyanurate-type polyisocyanate having one or more isocyanurate rings per molecule.

The isocyanurate-type polyisocyanate having one or more isocyanurate rings per molecule comprises preferably isocyanurate-type polyisocyanate having one isocyanurate ring per molecule as a main component, although this does not exclude the case where a small amount of isocyanurate-type polyisocyanates having two or more isocyanurate rings per molecule is contained as a by-product in the stage of producing the isocyanurate-type polyisocyanate.

The isocyanurate-type polyisocyanate can be synthesized from diisocyanates such as an aliphatic diisocyanate, an alicyclic diisocyanate, or an aromatic diisocyanate.

The usable aliphatic or alicyclic diisocyanates are preferably those having a carbon number of 4 to 30. Examples of aliphatic diisocyanates include tetramethylene diisocyanate, 1,5-pentamethylene diisocyanate (PDI), 1,6-hexamethylene diisocyanate (HDI), 2,2,4-(or 2,4,4-)trimethyl -1,6-hexamethylene diisocyanate, and lysine diisocyanate.

Examples of alicyclic diisocyanates include isophorone diisocyanate, hydrogenated xylene diisocyanate, hydrogenated diphenylmethane diisocyanate, norbornane diisocyanate, 1,4-diisocyanate cyclohexane, 1,3-bis(diisocyanate methyl) cyclohexane, and 4,4'-dicyclohexylmethane diisocyanate.

Examples of aromatic diisocyanates include 1,3-xylene diisocyanate, 1,4-xylene diisocyanate, 2,4-tolylene diisocyanate, 2,6-tolylene diisocyanate, diphenylmethane diisocyanate, phenylene diisocyanate, dimethyldiphenylmethane diisocyanate, triphenylmethane triisocyanate, naphthalene diisocyanate, and polymethylene polyphenyl polyisocyanate.

These diisocyanates may be used alone or in combination. Among them, 1,6-hexamethylene diisocyanate is preferred in terms of weather resistance and industrial availability. In consideration of the impact on the environment, it is also preferred to use environmentally friendly 1,5-pentamethylene diisocyanate which is a plant-derived isocyanate.

(2) Synthesis of isocyanurate-type polyisocyanates

Isocyanurate-type polyisocyanates can be obtained by subjecting diisocyanates to an isocyanuration reaction in the presence of an isocyanuration catalyst. Examples of isocyanuration catalysts include trimerization catalysts that react the isocyanate groups contained in diisocyanates to trimerize them and promote the formation of isocyanurate rings.

Examples of the isocyanuration catalysts include nitrogen-containing aromatic compounds such as tris(dimethylaminomethyl) phenol, 2,4-bis(dimethylaminomethyl) phenol, and 2,4,6-tris(dialkylaminoalkyl) hexahydro-S-triazine; carboxylic acid alkali metal salts such as potassium acetate, potassium 2-ethylhexanoate, and potassium octylate; tertiary ammonium salts such as trimethylammonium salt, triethylammonium salt and triphenyl ammonium salt; and quaternary ammonium salts such as tetramethylammonium salt, tetraethylammonium salt and tetraphenyl ammonium salt.

They can be used alone or in combination of two or more.

The amount of the isocyanurate catalyst added is preferably within a range of 0.001 to 0.1 parts by mass, and most preferably within a range of 0.005 to 0.05 parts by mass, per 100 parts by mass of diisocyanate.

Specific examples of the isocyanurate-type polyisocyanate having one isocyanurate ring according to the present invention include the following:

HDI3N: Isocyanurate-type triisocyanate synthesized from hexamethylene diisocyanate,
HTMDI3N: Isocyanurate-type triisocyanate synthesized from trimethyl hexamethylene diisocyanate,
PDI3N: Isocyanurate-type triisocyanate synthesized from pentamethylene diisocyanate,
IPDI3N: Isocyanurate-type triisocyanate synthesized from isophorone diisocyanate,
HTDI3N: Isocyanurate-type triisocyanate synthesized from hydrogenated tolylene diisocyanate,
HXDI3N: Isocyanurate-type triisocyanate synthesized from hydrogenated xylene diisocyanate,
NBDI3N: Isocyanurate-type triisocyanate synthesized from norbornane diisocyanate,
HMDI3N: Isocyanurate-type triisocyanate synthesized from hydrogenated diphenylmethane diisocyanate,
MDI3N: Isocyanurate-type triisocyanate synthesized from diphenylmethane diisocyanate,
TDI3N: Isocyanurate-type triisocyanate synthesized from tolylene diisocyanate,
XDI3N: Isocyanurate-type triisocyanate synthesized from xylene diisocyanate

The above-described triisocyanurates may be used alone or in combination.

(3) Modified Isocyanurate-type Polyisocyanate Compound

(i) Average Number of Isocyanate Groups

The modified isocyanurate-type polyisocyanate compound used in the present invention is a compound obtained by modifying the above-described isocyanurate-type polyisocyanate so as to have the average number of isocyanate groups of 1.7 to 2.3.

Specifically, the modified isocyanurate-type polyisocyanate compound of the present invention contains a partially blocked isocyanurate-type polyisocyanate in which at least one of the multiple isocyanate groups in the above-described isocyanurate-type polyisocyanate is blocked with a monool or the like.

Preferably, the modified isocyanurate-type polyisocyanate compound contains a partially blocked isocyanurate-type polyisocyanate derived from the isocyanurate-type polyisocyanate having one isocyanurate ring in which at least one of the three isocyanate groups in said isocyanurate-type polyisocyanate having one isocyanurate ring is blocked with a monool or the like.

Examples of partially blocked isocyanurate-type polyisocyanates obtained by modifying isocyanurate-type polyisocyanate having one isocyanurate ring include a partially blocked isocyanurate form in which one of the three isocyanate groups is blocked (having a blocking number of 1), a partially blocked isocyanurate form in which two of the three isocyanate groups are blocked (having a blocking number of 2), and a blocked isocyanurate form in which all three isocyanate groups are blocked (having a blocking number of 3).

Also included are unmodified isocyanurate-type polyisocyanates in which none of the isocyanate groups are blocked.

Among them, the partially blocked isocyanurate form with a blocking number of 1 wherein one of the three isocyanate functional groups is blocked is preferred. In practice, it may be a mixture of various isocyanurate forms having a blocking number of 0 to 3, although a partially blocked isocyanurate form having a blocking number of 1 is the main component. That is, the modified isocyanurate-type polyisocyanate compound of the present invention may be a mixture of compounds having different numbers of remaining isocyanate groups after partial blocking.

The content ratio of each isocyanurate form having a different blocking number to the entire mixture constituting the modified isocyanurate-type polyisocyanate compound of the present invention is not particularly limited. However, when specifying the average value of the number of isocyanate groups per molecule in the mixture(= "average number of isocyanate groups"), such an average number can be used as an indication for the content ratio of each isocyanurate form having a different blocking number in the mixture.

The average number of isocyanate groups for a modified isocyanurate-type polyisocyanate compound can be determined by a method for measuring the number of isocyanate groups using a chemical titration method known to those skilled in the art. For example, a person skilled in the art can determine the average number of isocyanate groups of the obtained modified isocyanurate-type polyisocyanate compound by using a known method such as a method for measuring the content of isocyanate groups in accordance with JIS-K-1603-1.

When a modified isocyanurate-type polyisocyanate compound only contains a partially blocked isocyanurate form with a blocking number of 1 in which the number of remaining isocyanate groups is 2, the average number of isocyanate groups thereof is 2 in general.

When a small amount of each isocyanurate form including the isocyanurate form with a blocking number of 0 (the number of remaining isocyanate groups is 3), the isocyanurate form with a blocking number of 2 (the number of remaining isocyanate groups is 1), and the isocyanurate form with a blocking number of 3 (the number of remaining isocyanate groups is 0) is contained in the mixture, the average number of isocyanate groups may become lower than 2 or higher than 2 depending on the proportion of the isocyanurate forms.

It is desirable that the proportion of partially blocked isocyanurate forms is set so that an average value of the number of isocyanurate groups in one molecule of the modified isocyanurate-type polyisocyanate compound of the present invention becomes 1.7 to 2.3, preferably 1.8 to 2.2.

If the average number of isocyanate groups is too small, flexibility might become too high and durability might be deteriorated, whereas if it is too large, flexibility might decrease and the touch might become poor.

The specific content of each partially blocked isocyanurate form with a blocking number 0, 1, 2, or 3 with respect to the total amount of the mixture constituting the modified isocyanurate-type polyisocyanate compound of the present invention is not particularly limited.

In view of the principle of a chemical reaction when a monool and an isocyanurate are reacted in a molar ratio of 1:1, the isocyanurate form with a blocking number of 1, or the number of remaining isocyanate groups of 2, is generated in the largest amount as the main product, and the partially blocked isocyanurate forms with blocking numbers of 0, 2, and 3 are considered to be generated in amounts similar to that of by-products.

The content of the partially blocked isocyanurate form having a blocking number of 1 or the number of remaining isocyanate groups of 2, which is the main component, is preferably 50% by mass or more, more preferably 70% by mass or more, and the total content of the isocyanurate forms having blocking numbers of 0, 2 and 3 is preferably less than 50% by mass, more preferably less than 30% by mass.

The polyurethane resin which is a reaction product of polyurethane resin raw material components containing a polyisocyanate component comprising such a modified isocyanurate-type polyisocyanate compound exhibits high flame retardancy by itself as well as sufficient flexibility as a suitable material for a synthetic artificial leather.

(ii) Modification Process (Partial Blocking Process)

For partially blocking the isocyanate groups of isocyanurate-type polyisocyanate, it is preferable to react the isocyanurate-type polyisocyanate with a monool. Examples of the monools used for partial blocking include an organic compound having one hydroxyl group per molecule. More preferably, a linear monohydric alcohol or a branched monohydric alcohol can be used.

Examples of linear monohydric alcohols include methanol, ethanol, n-propanol, n-butanol, n-pentanol, n-hexanol, n-heptanol, n-octanol, n-nonanol, n-decanol, n-undecanol, n-dodecanol (lauryl alcohol), n-tridecanol, n-tetradecanol, n-pentadecanol, n-hexadecanol, n-heptadecanol, n-octadecanol (stearyl alcohol), n-nonadecanol, and eicosanol.

Examples of branched monohydric alcohols include isopropanol, isobutanol, sec-butanol, tert-butanol, isopentanol, isohexanol, isoheptanol, isooctanol, 2-ethylhexane-1-ol, isononanol, isodecanol, 5-ethyl-2-nonanol, trimethylnonyl alcohol, 2-hexyldecanol, 3,9-diethyl-6-tridecanol, 2-isoheptyl-isoundecanol, 2-octyldodecanol, and other branched alkanols having 5 to 20 carbon atoms.

In addition, monools derived from plants can also be used. For example, monool derived from castor oil can be used.

Among them, it is preferable to use those selected from monools having 6 to 12 carbon atoms and monools derived from plants. Preferred examples of monools having 6 to 12 carbon atoms include 1-hexanol and 1-dodecanol. Examples of monools derived from plants such as castor oil include those having a biomass degree of 90% or more. Commercially available products thereof can also be used.

The amount of monool used is preferably 0.7 to 1.2 mol, more preferably 0.8 to 1.1 mol, and even more preferably 0.9 to 1.0 mol, per mol of isocyanurate-type polyisocyanate. By using the monool in the amount within this range, a modified isocyanurate-type polyisocyanate compound having a desired average number of isocyanate groups can be obtained.

The partial blocking reaction with monool can be performed under a gas atmosphere without containing moisture having no reactivity with isocyanate such as dry air or nitrogen gas, normally at ordinary pressure. The reaction conditions are, for example, a reaction temperature of 60°C or higher, preferably 80°C or higher, and 130°C or lower, preferably 100°C or lower, and a reaction time of 180 minutes or higher, preferably 210 minutes or higher, and 10 hours or lower, preferably 6 hours or lower.

(4) Other Polyisocyanate Components

Although the polyisocyanate components used in the present invention are mainly the modified isocyanurate-type polyisocyanate compound described above, other polyisocyanate compounds such as diisocyanates may also be comprised in as necessary.

According to the present invention, it is most preferable to use only a modified isocyanurate-type polyisocyanate compound as the polyisocyanate component, but diisocyanates may also be used together, which makes it easier to control flexibility and to maintain the balance of sufficient flame retardancy and flexibility.

Examples of the diisocyanates include aliphatic diisocyanates, alicyclic diisocyanates and aromatic diisocyanates which can be used as raw materials for the above-described modified isocyanurate-type polyisocyanate compound can be used.

(5) Composition of Polyisocyanate Component

The content of the modified isocyanurate-type polyisocyanate compound with respect to the total amount of the polyisocyanate component used in the present invention is preferably 60% by mass or more, more preferably 70% by mass or more, even more preferably 80% by mass or more, particularly preferably 90% by mass or more, and most preferably 100% by mass.

The content of the modified isocyanurate-type polyisocyanate compound with respect to the total amount of the polyisocyanate component and the polyol component which are the polyurethane resin raw material components of the present invention is preferably 5% by mass or more, more preferably 15% by mass or more, particularly preferably 25% by mass or more, and is preferably 65% by mass or less, more preferably 55% by mass or less.

In order to maintain both sufficient flame retardancy and flexibility, it is desirable to set the content of the modified isocyanurate polyisocyanate compound within the above-described range.

When the polyisocyanate component used in the present invention contains other component such as diisocyanate than the modified isocyanurate-type polyisocyanate compound, the content of the other component is preferably 40% by mass or less, more preferably 30% by mass or less, even more preferably 20% by mass or less, and particularly preferably 5 to 15% by mass to the total amount of polyisocyanate component. Within this range, manufacturing cost can be suppressed at a low level while maintaining the balance between sufficient flame retardancy and flexibility.

When a modified isocyanurate-type polyisocyanate compound and a diisocyanate compound are used in combination for the polyisocyanate component, the ratio of the molar amount of diisocyanate compound (a) to the molar amount of modified isocyanurate-type polyisocyanate compound (b), is preferably (a) : (b)=1:99 to 40:60 (molar ratio), more preferably (a):(b)=5:95 to 40:60 (molar ratio), even more preferably (a):(b)=5:95 to 35:65 (molar ratio), and particularly preferably (a):(b)=10:90 to 25:75 (molar ratio).

Using a diisocyanate compound together with a modified isocyanurate-type polyisocyanate compound makes it possible to adjust the composition so that appropriate flexibility can be obtained. In order to obtain sufficient flame retardancy, it is desirable to set the content of the isocyanurate-type polyisocyanate component within the above range.

The polyurethane resin obtained from the reaction product using a polyisocyanate component having the above-described composition as a polyurethane resin raw material component has high flame retardancy by itself and also has excellent flexibility. Since the polyurethane resin itself has high flame retardancy, a polyurethane resin composition with a low content of flame retardant can be obtained.

2. Polyol Component

The polyol component is used as a raw material component of the reaction product that constitutes the flame-retardant polyurethane resin composition of the present invention.

Examples of the polyol component include aromatic polyols, alicyclic polyols, aliphatic polyols, polyether polyols, polyester polyols, polylactone polyols, acrylic polyols, epoxy polyols, polycarbonate polyols, and urethane polyols. These may be used alone or in combination of two or more.

Examples of aromatic polyols include bisphenol A, bisphenol F, phenol novolac, and cresol novolac.

Examples of alicyclic polyols include cyclohexane diol, methylcyclohexane diol, isophorone diol, dicyclohexylmethane diol, and dimethyl dicyclohexylmethane diol.

Examples of aliphatic polyols include ethylene glycol, propylene glycol, butanediol, pentanediol, and hexanediol.

Examples of polyether polyols include a polymer obtained by ring-opening polymerization of at least one alkylene oxide such as ethylene oxide, propylene oxide or tetrahydrofuran, in the presence of at least one low molecular weight active hydrogen compound having two or more active hydrogens. Examples of low molecular weight active hydrogen compounds having two or more active hydrogens include diols such as bisphenol A, ethylene glycol, propylene glycol, butylene glycol and 1,6-hexanediol, triols such as glycerin and trimethylolpropane, and amines such as ethylenediamine and butylenediamine.

Examples of polyester polyols include polyester polyol resins obtained by a condensation reaction between a dibasic acid selected from carboxylic acids such as succinic acid, adipic acid, sebacic acid, dimer acid, maleic anhydride, fumaric anhydride, isophthalic acid, and terephthalic acid, alone or as a mixture, and a polyhydric alcohol such as ethylene glycol, propylene glycol, diethylene glycol, neopentyl glycol, trimethylolpropane and glycerin, alone or as a mixture; polycaprolactone obtained by ring-opening polymerization of ε-caprolactone and a polyhydric alcohol; and esters of a fatty acid having hydroxyl groups such as castor oil and polyhydric alcohols.

Examples of polylactone polyols include polypropiolactone glycol, polycaprolactone glycol, and polyvalerolactone glycol.

Examples of acrylic polyols include those obtained by copolymerizing a polymerizable monomer having one or more active hydrogens in one molecule with a monomer that can be copolymerized with the polymerizable monomer.

Specific examples of the above-described acrylic polyols include an acrylic polyol resin obtained by polymerizing the following (i) with (ii) in the presence or absence of (iii):

(i) compound(s) having active hydrogens, alone or as a mixture, selected from the group consisting of acrylates having active hydrogens such as 2-hydroxyethyl acrylate, 2-hydroxypropyl acrylate and 2-hydroxybutyl acrylate; methacrylates having active hydrogens such as 2-hydroxyethyl methacrylate, 2-hydroxypropyl methacrylate and 2-hydroxybutyl methacrylate; and methacrylates or acrylates having polyvalent active hydrogens such as acrylic acid glycerol monoester, methacrylic acid glycerol monoester, acrylic acid trimethylolpropane monoester and methacrylic acid trimethylolpropane monoester,

(ii) compound(s), alone or as a mixture, selected from the group consisting of acrylates such as methyl acrylate, ethyl acrylate, isopropyl acrylate, n-butyl acrylate and 2-ethylhexyl acrylate; methacrylates such as methyl methacrylate, ethyl methacrylate, isopropyl methacrylate, n-butyl methacrylate, isobutyl methacrylate and n-hexyl methacrylate;

(iii) compound (s), alone or as a mixture, selected from the group consisting of unsaturated carboxylic acids such as acrylic acid, methacrylic acid and itaconic acid; unsaturated amides such as acrylamide and N-methylol acrylamide; and other polymerizable monomers such as styrene, vinyl toluene, vinyl acetate and acrylonitrile.

Examples of epoxy polyols include novolac type, β-methyl epichlorohydrin type, cyclic oxirane type, glycidyl ether type, glycidyl ester type, glycol ether type, epoxidized type of aliphatic unsaturated compound, epoxidized aliphatic ester type, polyvalent carboxylic acid ester type, aminoglycidyl type, and resorcinol type epoxy resins.

Examples of polycarbonate polyols include a polyol obtained by dealcoholization reaction of a hydroxyl group-containing compound such as ethylene glycol, propylene glycol, butanediol, pentanediol, hexanediol, octanediol and nonanediol, with a carbonate compound such as diethylene carbonate and dipropylene carbonate. In addition, polycarbonate polyols obtained from aromatic polyhydric alcohols such as bisphenol A and aliphatic/alicyclic polyhydric alcohols such as 1,6-hexanediol are also included.

Examples of urethane polyols include those that have urethane bonds in the polymer produced by a polyaddition reaction of aromatic, aliphatic, or alicyclic diisocyanates with active hydrogen compounds, having hydroxyl groups on the polymer side chains or ends.

Examples of other polyol components include polybutadiene polyol, modified polyol of polyhydric alcohol and hydrogenated products thereof.

Examples of modified polyols of polyhydric alcohol include a product obtained by modifying the raw material polyhydric alcohol by reacting with alkylene oxide. Examples of polyhydric alcohols include trihydric alcohols such as glycerin and trimethylolpropane; tetrahydric to octahydric alcohols such as pentaerythritol, sorbitol, mannitol, sorbitan, diglycerin, dipentaerythritol, sucrose, glucose, mannose, fructose, methyl glucoside and derivatives thereof; phenols such as phenol, phloroglucine, cresol, pyrogallol, catechol, hydroquinone, bisphenol A, bisphenol F, bisphenol S, 1-hydroxynaphthalene, 1,3,6,8-tetrahydroxy naphthalene, anthrol, 1,4,5,8-tetrahydroxy anthracene and 1-hydroxy pyrene; polybutadiene polyol; castor oil polyol; polyfunctional polyols having 2 to 100 functional groups such as (co)polymers of hydroxyalkyl (meth) acrylates and polyvinyl alcohol; and condensates of phenol and formaldehyde (novolaks).

Although the method for modifying the polyhydric alcohol is not particularly limited, a method of adding alkylene oxide (hereinafter, "AO") is suitably used. Examples of AO include AOs having 2 to 6 carbon atoms such as ethylene oxide (hereinafter, "EO"), 1,2-propylene oxide (hereinafter, "PO"), 1,3-propylene oxide, 1,2-butylene oxide, and 1,4-butylene oxide. Among them, it is preferable to use PO, EO, and 1,2-butylene oxide, more preferable to use PO and EO, from the viewpoint of properties and reactivity. When using two or more Aos such as using PO and EO together, the addition method may be either block addition or random addition, or may be a combination thereof.

Among them, it is preferable to use polycarbonate polyol as the polyol component of the present invention from the viewpoint of durability. It is more preferable to use polycarbonate diol, particularly preferable to use polycarbonate diol having an average molecular weight of 500 to 4000.

Furthermore, in consideration of the impact on the environment, it is also preferable to use a sebacic acid polyol obtained from plant-derived sebacic acid, or a castor oil polyol derived from castor oil.

The content of the polyol component is preferably 35 parts by mass or more, more preferably 40 parts by mass or more, and particularly preferably 45 parts by mass or more, and is preferably 80 parts by mass or less, more preferably 75 parts by mass or less, and particularly preferably 70 parts by mass or less, per 100 parts by mass of the polyurethane resin raw material components of the present invention.

The content of the polyol component is preferably 30 parts by mass or more, more preferably 35 parts by mass or more, and particularly preferably 40 parts by mass or more, and is preferably 70 parts by mass or less, more preferably 65 parts by mass or less, and particularly preferably 60 parts by mass or less, per 100 parts by mass of the polyurethane resin composition of the present invention.

3. Other Raw Material Components

According to the present invention, in addition to the above-described polyisocyanate component and polyol component, the polyurethane resin raw material component may contain a crosslinking agent, a chain extender, a curing accelerator (a catalyst component), an organic solvent or the like as necessary.

In addition, a foaming agent, a defoamer, a thickener, a surface conditioner, a surfactant, a filler, a weather resistance improver, an UV absorber, water, a dispersant, a color pigment, a pH adjuster or the like may also be contained.

Although not particularly limited, a diol with a relatively low molecular weight can be used in general for the chain extender.

Examples of the diols include a diol derived from petroleum such as ethylene glycol, diethylene glycol, propanediol, butanediol, hexanediol and PEG, and a diol derived from plants such as 1,3-propanediol and 1,2-hexanediol. These diols may be used alone, or two or more of them may be used in combination as necessary. Diamines or the like can also be used as necessary.

Although not particularly limited, the amount of chain extender used may be approximately 1 to 5 parts by mass per 100 parts by mass of the flame-retardant polyurethane resin composition of the present invention.

A curing accelerator (a catalyst component) can also be used. Specific examples thereof include metal catalysts such as titanium diisopropoxy-bis-(ethyl acetoacetate), amine catalysts and DBU catalysts. Although not particularly limited, the amount of the curing accelerator used may be about 0.01 to 1 parts by mass per 100 parts by mass of the flame-retardant polyurethane resin composition of the present invention.

Examples of the organic solvents, although not particularly limited, include polar solvents that are inactive against isocyanate groups such as dimethylformamide (DMF) and dimethylsulfoxide (DMSO), and other organic solvents such as methyl ethyl ketone (MEK), toluene and xylene.

4. Flame Retardant

As a flame retardant contained in the flame-retardant polyurethane resin composition of the present invention, any known flame retardants can be exemplified.

Examples of organic phosphorus compounds include phosphate ester and their salts, phosphite ester and their salts, phosphonic acid and its derivatives including salts, phosphinic acid and its derivatives including salts, phosphine, phosphine oxide, biphosphine, phosphonium salts and phosphazene. Examples of inorganic phosphorus compounds include phosphates such as ammonium polyphosphate. In addition to the above compounds, red phosphorus as elemental phosphorus may also be used.

Examples of the flame retardants other than phosphorus compounds include melamine-based compounds such as melamine cyanurate and melamine, metal hydrates such as aluminum hydroxide and magnesium hydroxide, and antimony compounds such as antimony trioxide and antimony pentoxide.

Among them, phosphinates are preferred in terms of exhibiting high flame retardancy without affecting on physical properties of the material.

The content of the flame retardant is preferably 15% by mass or less, more preferably 12.5% by mass or less, and particularly preferably 10% by mass or less, and is preferably 0% by mass or more, more preferably 2.5% by mass or more, and particularly preferably 5% by mass or more, with respect to the total amount of the flame-retardant polyurethane resin composition of the present invention.

The flame-retardant polyurethane resin composition of the present invention is mainly composed of a polyurethane resin made of a reaction product using a specific polyisocyanate component, in which, since high flame retardancy is ensured without impairing flexibility, the amount of flame retardant added can be suppressed.

5. Other Additives

The flame-retardant polyurethane resin composition of the present invention may contain, as necessary, a foaming agent, a defoamer, a thickener, a surface conditioner, a surfactant, fillers, a weather resistance improver, a UV absorber, organic solvents, water, a dispersant, color pigments, a pH adjuster and the like, within the range that does not impair the physical properties of the polyurethane resin obtained after curing.

In addition, optional components such as an urethanization catalyst, a silane coupling agent, a thixotropic agent, a tackifier, waxes, a heat stabilizer, a light resistance stabilizer, a fluorescent brightener, a thermoplastic resin, a thermosetting resin, dyes, pigments, a conductivity imparting agent, an antistatic agent, a moisture permeability improver, a water repellent, an oil repellent, a hollow foam, a crystal water-containing compound, a water absorbent, a moisture absorbent, a deodorant, a foam stabilizer, an antifungal agent, a preservative, an anti-algae agent, a pigment dispersant, an inert gases, an antiblocking agent, and a hydrolysis inhibitor may also be contained as necessary.

These additives can be used alone or in combination of two or more.

## 6. Reaction Product

The reaction product contained in the flame-retardant polyurethane resin composition of the present invention is a polyurethane resin obtained by subjecting polyurethane resin raw material components containing the polyisocyanate component, polyol component and other raw material components used as necessary to treatments such as drying, heating, and curing.

The molar ratio of the polyisocyanate component to the polyol component is preferably polyisocyanate component/polyol component = 0.6/1 to 1.8/1. When either one of the polyisocyanate component or the polyol component is used too much in the amount than the other, it may become difficult to obtain a resin layer that exhibits durability and toughness.

The number average molecular weight of the polyurethane resin obtained in this manner is preferably 2000 or more, more preferably 2500 or more. Although there is no particular limit to the upper limit of the number average molecular weight, it is normally 200,000,000 or less, preferably 100,000,000 or less. When the number average molecular weight of the polyurethane resin is within the above range, a resin material suitable for forming a resin layer can be obtained.

## 7. Method for Producing Flame-retardant Polyurethane Resin Composition

The flame-retardant polyurethane resin composition of the present invention can be obtained by mixing the polyurethane resin raw material components consisting of the polyisocyanate component, polyol component and other raw material components described above, a flame retardant and other additives together to form a flame-retardant polyurethane resin formulation, and then subjecting to heat-curing treatment after molding if necessary.

The heat-curing treatment can be performed under preferable conditions such as a temperature of 80 to 140°C for 1 to 10 minutes.

If necessary, a process for drying and removing liquid components such as organic solvents contained therein can also be included. For example, the polyurethane resin raw material components, flame retardants and other additives can be mixed, and then molded, dried, and heat-cured. Drying and heat-curing may be performed in one process, or in separate processes.

For example, when forming a layer consisting of a flame-retardant polyurethane resin composition on a support body such as a base fabric of a synthetic artificial leather of the present invention as described below, the flame-retardant polyurethane resin formulation can be applied to the support body, and then dried and heat-cured.

It can also be obtained by reacting a part or all of the polyisocyanate component and polyol component in advance, preferably in the presence of a chain extender, and then mixing therewith a flame retardant and other additives.

An organic solvent can also be comprised when a part or all of the polyisocyanate component, polyol component and other raw material components are reacted in advance before mixing a flame retardant and other additives therewith.

## II. Flame-retardant Polyurethane Resin Formulation

The flame-retardant polyurethane resin formulation of the present invention is a raw material formulation used for forming the above-described flame-retardant polyurethane resin composition, which contains a flame retardant and polyurethane resin raw material components comprising a polyisocyanate component and a polyol component.

Examples of the polyisocyanate components, polyol components and flame retardants which can be used for the flame-retardant polyurethane resin formulation can be selected from those exemplified as available components for the above-described flame-retardant polyurethane resin composition.

In particular, the polyisocyanate component comprises a modified isocyanurate-type polyisocyanate compound having an average number of isocyanate groups of 1.7 to 2.3.

In addition, other raw material components such as a chain extender and a curing accelerator may be added as necessary. Other additives than the flame retardant, as described above, may also be added.

The flame-retardant polyurethane resin formulation can be obtained by mixing and stirring the above polyisocyanate component, polyol component and other raw material components used as necessary, as well as the flame retardant and other additives, by a conventionally known method.

It can also be obtained by reacting in advance a part or all of the polyurethane resin raw material components comprising the above-described polyisocyanate component, polyol component and other raw material components used as necessary, preferably in the presence of a chain extender, and then mixing the flame retardant and other additives therewith. An organic solvent can also be used in the reaction.

The molar ratio of the polyisocyanate component to the polyol component is preferably polyisocyanate component/polyol component = 0.6/1 to 1.8/1. When either one of the polyisocyanate component or the polyol component is used too much in the amount than the other, it may become difficult to obtain a resin layer that exhibits durability and toughness.

The flame-retardant polyurethane resin composition of the present invention can be obtained by subjecting the flame-retardant polyurethane resin formulation of the present invention to a heat-curing treatment.

The heat-curing treatment can be performed under the preferable conditions such as a temperature of 80 to 140°C for 1 to 10 minutes. If necessary, the solvent contained therein can be dried and removed before heating and curing.

For example, when forming a layer made of a flame-retardant polyurethane resin composition on a support body such as a base fabric of the synthetic artificial leather of the present invention as described below, the flame-retardant polyurethane resin formulation can be applied to the support body, followed by performing treatments such as drying, heating and curing.

When applying a flame-retardant polyurethane resin formulation onto a support body, it is preferable to adjust the formulation so that it has a viscosity that allows application without containing a solvent, although containing an organic solvent to obtain a viscosity suitable for application, if necessary, is not excluded from the scope of the invention.

III. Synthetic Artificial Leather

The synthetic artificial leather of the present invention comprises at least a support body such as a base fabric and a surface skin layer. In the present invention, the term "synthetic artificial leather" is used as a concept that includes so-called a synthetic leather and an artificial leather. The synthetic artificial leather of the present invention has excellent flexibility and high flame retardancy, and does not cause bleeding problems. Therefore, it can be used suitably as a synthetic leather or an artificial leather both excellent in flexibility and flame retardancy for a material for automobile seats or the like.

1. Support Body

The support body such as a base fabric used in the synthetic artificial leather of the present invention can be any conventionally known synthetic artificial leather substrate, and is not particularly limited. Examples of the base fabrics include fibrous fabrics such as woven fabrics made of twill weave, plain weave and the like and knitted fabrics, brushed fabrics obtained by mechanically brushing the cotton fabric of the woven fabric, synthetic fabrics such as rayon fabric, nylon fabric, polyester fabric, Kevlar fabric ("Kevlar" is a registered trademark), nonwoven fabrics made of polyester, nylon, various latexes or the like, various synthetic resin films and sheets, and natural leather. These can be selected appropriately according to the purpose. Preferred examples include fibrous fabrics such as woven fabrics, knitted fabrics, and nonwoven fabrics.

The thickness of the support body can be set appropriately taking into consideration the material and structure, the texture of the resulting synthetic artificial leather, and the intended use. Accordingly, the thickness thereof is preferably 100 to 2000 μm, particularly preferably 200 to 1000 μm.

2. Surface Skin Layer

The synthetic artificial leather of the present invention has a surface skin layer containing the flame-retardant polyurethane resin composition on at least one side of the support body. The surface skin layer may be either a porous layer or a non-porous layer.

The thickness of the surface skin layer can be set appropriately taking into consideration the texture, the intended use of the resulting synthetic artificial leather, the material and shape of the support body, and the like. The preferable thickness thereof is 5 to 300 μm.

According to the present invention, the surface skin layer may be colored, gloss adjusted, given an uneven pattern or the like, for the purpose of improving the surface strength and design of the synthetic artificial leather. It may be composed of two or more layers as necessary. When composed of two or more layers, examples of the layers other than the layer made of the flame-retardant polyurethane resin composition of the present invention include a heat insulating layer and a foam layer.

3. Method for Manufacturing Synthetic Artificial Leather

The synthetic artificial leather of the present invention can be manufactured by a method including a process of forming a surface skin layer by laminating the above-described flame-retardant polyurethane resin formulation on a support body followed by applying a heat treatment.

The surface skin layer can be formed, for example, by applying the flame-retardant polyurethane resin formulation capable of forming the above-described flame-retardant polyurethane resin composition to at least one side of the support body using a coating method.

Examples of the coating methods include a method of directly coating the flame-retardant polyurethane resin formulation on a fabric using a knife coater, comma coater, roll coater, die coater, or lip coater.

The application thickness of the flame-retardant polyurethane resin formulation is not particularly limited, but is preferably 5 to 300 $\mu$m.

It is preferable to adjust a composition ratio of the flame-retardant polyurethane resin formulation so that it has a viscosity that can be applied even without a solvent, but if necessary for viscosity adjustment, a solvent can be added. Examples of the solvents include known organic solvents such as DMF, DMSO, MEK, toluene, and xylene. In this case, it is preferable to use a solution in which the solid content is dispersed at a concentration of about 60 to 100% by mass.

After the application (or coating) process, the coating layer thus formed is subjected to a treatment of drying and heating for heat-curing the flame-retardant polyurethane resin formulation to form a layer consisting of the flame-retardant polyurethane resin composition. Drying and heat-curing can be performed in one step or in separate steps. For example, after forming the coating layer, it is preferable to perform a treatment at a temperature of 80 to 140°C for 1 to 10 minutes.

The synthetic artificial leather can also be manufactured by a dipping method in which the support body is impregnated with the above-described flame-retardant polyurethane resin formulation.

The synthetic artificial leather can also be manufactured by a lamination method in which a separately formed surface skin layer is laminated to the support body. For example, a method can be used in which the flame-retardant polyurethane resin formulation is formed into a film on a releasable substrate by a coating method or the like to form a surface skin layer, and the surface skin layer is laminated to a support body followed by peeling off the releasable substrate.

Examples of the methods for lamination include a method using an adhesive or the like and a method comprising a step for half-curing the flame-retardant polyurethane resin formulation of the present invention by heating to be in a state of keeping adhesiveness, followed by laminating the half-cured formulation to a support body and then full-curing the half-cured flame-retardant polyurethane resin formulation by heating again.

Examples of the coating methods include known methods such as comma coating, knife coating, roll coating, gravure coating, die coating, and spray coating. After forming a coated film on a releasable substrate, it can be dried appropriately to obtain a surface skin layer on the releasable substrate. Then, the surface skin layer thus obtained can be attached by pressure onto a support body directly, or can be attached by pressure onto a support body applied an adhesive in advance by a known method. Then, the surface skin layer is subjected to heat-curing by heat treatment such as drying and/or heating followed by peeling off the releasable substrate.

Attaching by pressure can be performed under preferable conditions of a temperature of 20 to 140°C, a pressure of 0.1 to 10 MPa, for 0.0005 to 3 minutes. It is preferable to perform heat treatment under conditions of a temperature of 80 to 140°C for 1 to 10 minutes.

When the surface skin layer is attached to the support body via an adhesive, examples of the adhesives that can be used include the above-described flame-retardant polyurethane resin composition, as well as conventional polyurethane resin, acrylic resin, and epoxy resin adhesives made from petroleum-based raw materials. The adhesive may be applied to either the surface skin layer side or the support body side.

Although not particularly limited, examples of releasable substrates include a film made of a resin that has releasable properties against a polyurethane resin such as a polyolefin resin and a silicone resin (hereinafter, referred to as "a release agent"), a release paper, release cloth, and release film in which a release layer made of a release agent is laminated on a substrate such as paper, cloth, or film.

The releasable substrate may have an uneven pattern. Using such a releasable substrate enables to form a resin film having an uneven pattern on the surface capable of preventing the occurrence of blocking between the film surfaces and providing a synthetic artificial leather excellent in touch.

Among the above methods, the lamination method is preferably used in terms of the physical properties and texture of the synthetic artificial leather obtained. However, the present invention is not limited to these methods.

The synthetic artificial leather of the present invention as described above is suitable for shoes, clothing, bags, furniture, and vehicle interior materials such as instrument panels, doors, consoles and seats.

4. Physical Properties of Synthetic Artificial Leather

The synthetic artificial leather thus obtained can be further subjected to post-processing such as surface treatment and rubbing processing as necessary.

In addition to the above-described support body and surface skin layer, the synthetic artificial leather may also comprise an adhesive layer and a surface protective layer. The adhesive layer can be provided between the support body and the surface skin layer. The surface protective layer can be provided on the outer side of the surface skin layer. Examples of the surface protective layer include a layer formed from a known polyurethane resin.

The synthetic artificial leather having a surface protective layer as the outermost layer in addition to the support body and surface skin layer can be obtained by a method including a step for applying a polyurethane resin that will become the outermost surface protective layer onto a releasable substrate followed by drying, a step for applying the flame-retardant polyurethane resin formulation of the present invention thereon, a step for half-curing the flame-retardant polyurethane resin formulation by heating to be in a state of keeping adhesiveness followed by laminating the layer consisting of the half-cured formulation onto a support body, and a step for full-curing by heating the layer consisting of the half-cured flame-retardant polyurethane resin formulation.

The physical properties of the film that forms the surface skin layer made of the above-described flame-retardant polyurethane resin composition preferably satisfy a 100% modulus of 0.4 MPa to 2.0 MPa, a strength at break of 2.0 to 6.0 MPa, and an elongation at break of 150 to 500%.

The flame retardancy measured in accordance with the test method of the US Federal Motor Vehicle Safety Standard FMVSS302 is preferably such that the maximum burning rate is 80 mm/min or less.

A synthetic artificial leather excellent in mechanical strength and texture or flexibility as well as having high flame retardancy can be obtained by applying the surface skin layer whose film properties satisfy the above-described ranges.

Regarding the flame retardancy of a synthetic artificial leather formed of a surface skin layer made of the flame-retardant polyurethane resin composition and a support body, it is preferable that the maximum burning rate, as measured in accordance with the test method of the US Federal Motor Vehicle Safety Standard FMVSS302, is 80 mm/min or less. The synthetic artificial leather whose various physical properties satisfy the above-described ranges has high flame retardancy and also has excellent mechanical strength and texture or flexibility.

**Examples**

The present invention will be described below with reference to examples, but the present invention is not limited by these examples. Each evaluation in the examples was performed according to the following method.

[Flame retardancy]

Flame retardancy was evaluated in accordance with the test method of the US Federal Motor Vehicle Safety Standard FMVSS302.

A test piece made of a synthetic artificial leather having a thickness of 1000 $\mu$m, cut to a width of 100 mm and a length of 350 mm, was exposed to a gas burner flame at one edge. The flame was applied for 15 seconds.

The distance and time from when the applied flame traveled across a marked line set 38 mm from the edge of the test piece until it extinguished were measured. The burning rate was calculated to evaluate flame retardancy according to the following criteria: ○(Good): The test piece did not ignite, or the ignited flame extinguished before it reached the marked line, or the maximum burning rate was less than 50 mm/min.

△(Medium) : The maximum burning rate was between 50 mm/min and 80 mm/min.
✕(Poor): The maximum burning rate was more than 80 mm/min.

[Flexibility]

A test piece made of a polyurethane resin film with a width of 30 mm, length of 100 mm, and thickness of 150 $\mu$m was attached to a gripping device of a precision universal testing machine, product name "Autograph AG-100A" manufactured by Shimadzu Corporation, with a gripping width of 30 mm and gripping interval of 50 mm, under the circumstances at room temperature of 20 $\pm$ 2°C and humidity of 65 $\pm$ 5% RH. The test was carried out to move the gripping device at a movement rate of 100 mm/min to break the test piece. The load (MPa) was measured when the stroke distance reached 50 mm to calculate 100% modulus to evaluate flexibility according to the following criteria:

○(Good): 100% modulus was **0.6** MPa or more and less than 1 MPa
△(Medium) : 100% modulus was 0.4 MPa or more and less than 0.6 MPa, or 1 MPa or more and less than 2 MPa

X(Poor): 100% modulus was less than 0.4 MPa, or 2 MPa or more

[Average Number of Isocyanate Groups]

The average number of isocyanate groups was determined by the following method, referring to JIS K 1603-1:2007.

(1) 0.5 M hydrochloric acid and 0.5 M dibutylamine/toluene solution were prepared respectively in 300 mL measuring flasks. 0.5 M hydrochloric acid was filled in a 25 mL burette. A blank test was performed to record the titration amount.

(2) Using a 10 mL measuring pipette, the dibutylamine/toluene solution was placed in a 300-500 mL beaker, and 0.5 g of each modified polyisocyanate sample synthesized in Synthesis Examples 1-5 was added thereto. Then, 20 mL of dehydrated toluene was added and stirred for 1 hour.

(3) 150 mL of DMF and 15 drops of bromocresol green solution were added to the stirred solution followed by further stirring well, and titrated with hydrochloric acid standard solution.

(4) From the titration results, the isocyanate group content (%) was calculated using the following formula (Formula 1), and then the number of remaining isocyanate groups was calculated from the isocyanate group content using the following formula (Formula 2), which was taken as the average number of isocyanate groups.

[Formula 1]

$$N_1 = \frac{42.02 \times 0.25 \times (V_1 - V_2) \times f}{m_0 \times 1000} \times 100$$

$N_1$: Isocyanate group content (mass fraction; %)
$V_1$: Amount of hydrochloric acid used in the blank test (mL), measured to 0.01 mL
$V_2$: Amount of hydrochloric acid used in the sample titration (mL), measured to 0.01 mL
0.25: Concentration of hydrochloric acid (mol/L)
$m_0$: Mass of a sample (g)
42.02: Chemical equivalent of isocyanate group (g/mol)
f: Factor of 0.5 mol/L hydrochloric acid standard solution

[Formula 2]

$$N_2 = \frac{N_1 \times m_1}{N_0 \times 42.02 \times 100} \times 3$$

$N_2$: Number of remaining isocyanate groups
$m_1$: Total weight (g) of the synthesized modified polyisocyanate
$N_0$: Number of molecules (mol) of the isocyanurate-type polyisocyanate used in the synthesis
3: Number of functional groups of the isocyanurate-type polyisocyanate

The partially blocked isocyanurate-type polyisocyanate was produced as follows:

<Synthesis Example 1>

10 parts by mass of 1-hexanol (monool) was added to 50 parts by mass of 1,5-pentamethylene diisocyanate-derived isocyanurate (isocyanurate-type polyisocyanate; product name "STABiO D-370N" having a biomass degree of 70%, manufactured by Mitsui Chemicals, Inc., "STABiO" is a registered trademark), and the mixture was subjected to a reaction at 80°C for 4 hours under a nitrogen atmosphere (normal pressure) to obtain "partially blocked isocyanurate-type polyisocyanate 1". The average number of isocyanate groups (average NCO functional group number) of this product was calculated to be 1.89. The amount of monool used was 0.33 mol per mol of the isocyanurate-type polyisocyanate.

<Synthesis Example 2>

34 parts by mass of castor oil monool having a biomass degree of 98%, product name "URIC H-31" manufactured by ITOH OIL CHEMICALS CO., LTD., was added to 50 parts by mass of 1,5-pentamethylene diisocyanate-derived isocyanurate having a biomass degree of 70%, product name "STABiO D-370N" manufactured by Mitsui Chemicals, Inc., and the mixture was subjected to a reaction at 80°C for 4 hours under a nitrogen atmosphere to obtain "partially blocked isocyanurate-type polyisocyanate 2". The average number of isocyanate groups of this product was 1.81. The amount of monool used was 0.33 mol per mol of the isocyanurate-type polyisocyanate.

<Synthesis Example 3>

12 parts by mass of 1-hexanol was added to 50 parts by mass of 1,5-pentamethylene diisocyanate-derived isocyanurate having a biomass degree of 70%, product name "STABiO D-370N" manufactured by Mitsui Chemicals, Inc., and the mixture was subjected to a reaction at 80°C for 4 hours under a nitrogen atmosphere to obtain "partially blocked isocyanurate-type polyisocyanate 3". The average number of isocyanate groups of this product was 1.78. The amount of monool used was 0.39 mol per mol of isocyanurate-type polyisocyanate.

<Synthesis Example 4>

7 parts by mass of 1-hexanol was added to 50 parts by mass of 1,5-pentamethylene diisocyanate-derived isocyanurate having a biomass degree of 70%, product name "STABiO D-370N" manufactured by Mitsui Chemicals, Inc., and the mixture was subjected to a reaction at 80°C for 4 hours under a nitrogen atmosphere to obtain "partially blocked isocyanurate-type polyisocyanate 4". The average number of isocyanate groups of this product was 2.25. The amount of monool used was 0.23 mol per mol of isocyanurate-type polyisocyanate.

<Synthesis Example 5>

4 parts by mass of 1-hexanol was added to 50 parts by mass of 1,5-pentamethylene diisocyanate-derived isocyanurate having a biomass degree of 70%, product name "STABiO D-370N" manufactured by Mitsui Chemicals, Inc., and the mixture was subjected to a reaction at 80°C for 4 hours under a nitrogen atmosphere to obtain "partially blocked isocyanurate-type polyisocyanate 5". The average number of isocyanate groups of this product was 2.40. The amount of monool used was 0.13 mol per mol of isocyanurate-type polyisocyanate.

<Example 1>

60 parts by mass of the above-obtained "partially blocked isocyanurate-type polyisocyanate 1" as a polyisocyanate component, 84 parts by mass of polycarbonate polyol having a number average molecular weight of 2000 as a polyol component, 3 parts by mass of 1,4-butanediol as a crosslinking agent, 0.1 parts by mass of titanium diisopropoxy-bis (ethyl acetoacetate), product name "Orgatics TC750" manufactured by Matsumoto Fine Chemical Co., Ltd., as a curing accelerator, and 4 parts by mass of a phosphinic acid metal salt-based flame retardant, product name "Exolit OP930" manufactured by Clariant Chemicals Co., Ltd., were mixed and stirred to obtain a flame-retardant polyurethane mixture liquid 1.

The molar ratio of polyisocyanate component/polyol component was 1.20.

[Surface skin layer]

100 parts by mass of polycarbonate-based polyurethane resin, product name "S-705" manufactured by DIC Corporation, was mixed with 20 parts by mass of dimethylformamide, 25 parts by mass of methylethylketone, and 20 parts by mass of black pigment followed by stirring the mixture. The mixture thus obtained was applied to a flat release paper, product name "EV130TPD" manufactured by Lintec Corporation, to form a wet coating film having a thickness of 200 $\mu$m.

The wet coating film was dried and solidified in a dryer at 90°C for 1.5 minutes and at 130°C for 1.5 minutes to obtain a resin film with a thickness of 30 $\mu$m which is a polyurethane resin layer consisting the outermost layer.

The above-obtained flame-retardant polyurethane mixture liquid 1 was applied to the above-described resin film formed on the release paper using an applicator to form a wet coating film having a thickness of 250 $\mu$m. Then, preliminary drying was performed in a dryer at 130°C for 3 minutes to obtain a surface skin layer consisting of a flame-retardant polyurethane resin composition.

[Preparation of Synthetic Artificial Leather]

The surface skin layer thus obtained was superimposed in a semi-dried state on a polyester tricot cloth which was a support body having a thickness of 800 $\mu$m, so that the flame-retardant polyurethane resin composition layer was in contact with the cloth, and then the two were laminated under a pressure of 0.5 MPa and full-cured in a dryer at 130°C for 3 minutes. The release paper was peeled off to obtain the synthetic artificial leather of the present invention having a thickness of 1000 $\mu$m.

[Preparation of polyurethane resin film for flexibility evaluation]

The above-obtained flame-retardant polyurethane mixture liquid 1 was applied to a flat release paper, "EV130TPD" manufactured by Lintec Corporation, to form a wet coating film having a thickness of 250 $\mu$m. Then, the wet coating film was pre-dried in a dryer at 130°C for 3 minutes and then full-cured at 130°C for 3 minutes. The flame-retardant polyurethane resin film thus obtained was aged at 80°C for 3 hours, followed by peeling the release paper off to obtain a flame-retardant polyurethane resin film having a thickness of 150 $\mu$m for evaluating flexibility.

<Example 2>

84 parts by mass of the above-obtained "partially blocked isocyanurate-type polyisocyanate 2" as a polyisocyanate component, 84 parts by mass of polycarbonate polyol having a number average molecular weight of 2000 as a polyol component, 3 parts by mass of 1,4-butanediol as a crosslinking agent, 0.1 parts by mass of titanium diisopropoxy bis(ethyl acetoacetate), product name "Orgatics TC750" manufactured by Matsumoto Fine Chemical Co., Ltd., as a curing accelerator, and 4 parts by mass of a flame retardant, product name "Exolit OP930" manufactured by Clariant Chemicals Co., Ltd., were mixed and stirred to obtain a flame-retardant polyurethane mixture liquid 2. The molar ratio of polyisocyanate component/polyol component was 1.20.

The flame-retardant polyurethane mixture liquid 2 thus obtained was used to obtain a synthetic artificial leather and a polyurethane resin film in the same manner as in Example 1.

<Example 3>

62 parts by mass of the above-obtained "partially blocked isocyanurate-type polyisocyanate 3" as a polyisocyanate component, 74 parts by mass of polycarbonate polyol having a number average molecular weight of 2000 as a polyol component, 3 parts by mass of 1,4-butanediol as a crosslinking agent, 0.1 parts by mass of titanium diisopropoxy bis(ethyl acetoacetate), product name "Orgatics TC750" manufactured by Matsumoto Fine Chemical Co., Ltd., as a curing accelerator, and 4 parts by mass of a flame retardant, product name "Exolit OP930" manufactured by Clariant Chemicals Co., Ltd., were mixed and stirred to obtain a flame-retardant polyurethane mixture liquid 3. The molar ratio of polyisocyanate component/polyol component was 1.20.

The flame-retardant polyurethane mixture liquid 3 thus obtained was used to obtain a synthetic artificial leather and a polyurethane resin film in the same manner as in Example 1.

<Example 4>

57 parts by mass of the above-obtained "partially blocked isocyanurate-type polyisocyanate 4" as a polyisocyanate component, 102 parts by mass of polycarbonate polyol having a number average molecular weight of 2000 as a polyol component, 4 parts by mass of 1,4-butanediol as a crosslinking agent, 0.1 parts by mass of titanium diisopropoxy bis(ethyl acetoacetate), product name "Orgatics TC750" manufactured by Matsumoto Fine Chemical Co., Ltd., as a curing accelerator, and 5 parts by mass of a flame retardant, product name "Exolit OP930" manufactured by Clariant Chemicals Co., Ltd., were mixed and stirred to obtain a flame-retardant polyurethane mixture liquid 4. The molar ratio of polyisocyanate component/polyol component was 1.20.

The flame-retardant polyurethane mixture liquid 4 thus obtained was used to obtain a synthetic artificial leather and a polyurethane resin film in the same manner as in Example 1.

<Example 5>

In the above Example 1, the amount of "partially blocked isocyanurate-type polyisocyanate 1" was changed to 40 parts by mass, and 5 parts by mass of 1,5-pentamethylene diisocyanate having a biomass degree of 71%, product name "STABiO PDI" manufactured by Mitsui Chemicals, Inc., was also used as the polyisocyanate component. Except for this, a synthetic artificial leather and a polyurethane resin film were obtained in the same manner as in Example 1. The molar ratio of polyisocyanate component/polyol component was 1.20.

<Comparative Example 1>

In the above Example 1, "partially blocked isocyanurate-type polyisocyanate 1" was changed to 14 parts by mass of 1,5-pentamethylene diisocyanate having a biomass degree of 71%, product name "STABiO PDI" manufactured by Mitsui Chemicals, Inc., and the amount of flame retardant was changed to 3 parts by mass. Except for this, a synthetic artificial leather and a polyurethane resin film were obtained in the same manner as in Example 1. The molar ratio of polyisocyanate component/polyol component was 1.20.
The evaluation results of flame retardancy and flexibility are shown in Table 1. It is clear that adding the flame retardant in the amount required to exhibit the same level of flame retardancy as in the Examples in Comparative Example 1 results in a significant decrease in flexibility.

<Comparative Example 2>

54 parts by mass of the above-obtained "partially blocked isocyanurate-type polyisocyanate 5" as a polyisocyanate component, 118 parts by mass of polycarbonate polyol having a number average molecular weight of 2000 as a polyol component, 4 parts by mass of 1,4-butanediol as a crosslinking agent, 0.1 parts by mass of titanium diisopropoxy bis(ethyl acetoacetate), product name "Orgatics TC750" manufactured by Matsumoto Fine Chemical Co., Ltd., as a curing accelerator, and 5 parts by mass of a flame retardant, product name "Exolit OP930" manufactured by Clariant Chemicals Co., Ltd., were mixed and stirred to obtain a flame-retardant polyurethane mixture liquid 5. The molar ratio of polyisocyanate component/polyol component was 1.20.
The flame-retardant polyurethane mixture liquid 5 thus obtained was used to obtain a synthetic artificial leather and a polyurethane resin film in the same manner as in Example 1.
The results of evaluation of the synthetic artificial leathers of the above examples and comparative examples are shown in Table 1. The values for the components consisting the surface skin layer in the table 1 represent "parts by mass".

[Table 1]

| | | | Example 1 | Example 2 | Example 3 | Example 4 | Example 5 | Comp. Ex. 1 | Comp. Ex. 2 |
|---|---|---|---|---|---|---|---|---|---|
| | | Partially blocked isocyanurate polyisocyanate | Synthesis Example 1 | Synthesis Example 2 | Synthesis Example 3 | Synthesis Example 4 | Synthesis Example 1 | – | Synthesis Example 5 |
| Surface Skin Layer | Monool | 1-hexanol | 10 | – | 12 | 7 | 7 | – | 4 |
| | | Castor Oil Monool | – | 34 | – | – | – | – | – |
| | Isocyanurate | STABiO D-370N | 50 | 50 | 50 | 50 | 33 | – | 50 |
| | Isocyanate | STABiO PDI | – | – | – | – | 5 | 14 | – |
| | Polyol | polycarbonate diol | 84 | 84 | 74 | 102 | 84 | 84 | 118 |
| | Crosslinking Agent | 1,4-butane diol | 3 | 3 | 3 | 4 | 3 | 3 | 4 |
| | Curing Accelerator | titanium diisopropoxy bis(ethyl acetoacetate) | 0.1 | 0.1 | 0.1 | 0.1 | 0.1 | 0.1 | 0.1 |
| | Flame Regardant | | 4 | 4 | 4 | 5 | 4 | 3 | 5 |
| Average NCO functional group number | | | 1.89 | 1.81 | 1.78 | 2.25 | 1.89 | – | 2.40 |
| Evaluation | Flame Retardancy (burning rate: mm/min) | | ○(35.4) | △(63.5) | ○(29.3) | ○(31.1) | △(50.8) | ×(96.4) | △(63.5) |
| | Flexibility 100% Modulus: MPa | | ○(0.92) | ○(0.68) | △(0.44) | △(1.73) | ○(0.92) | △(1.19) | ×(broken at 60%) |

**EP 4 636 004 A1**

**Industrial Applicability**

The polyurethane resin using the specific polyisocyanate component of the present invention has excellent flame retardancy and flexibility, and the amount of flame retardant can be kept low, and therefore a problem of bleeding does not occur.

Thus, a flame-retardant polyurethane resin composition suitable for a synthetic artificial leather such as a synthetic leather and an artificial leather both having high flexibility and flame retardancy can be obtained.

The synthetic artificial leather of the present invention can be used in various fields such as clothing, bags, shoes, and vehicle interior materials. Especially, it can be suitably used for vehicle interior materials including automobile seats, ceiling materials, dashboards, door lining materials, and steering wheels.

**Claims**

1.  A flame-retardant polyurethane resin composition which comprises a flame retardant and a reaction product of polyurethane resin raw material components containing a polyisocyanate component and a polyol component, wherein said polyisocyanate component comprises a modified isocyanurate-type polyisocyanate compound having an average number of isocyanate groups of 1.7 to 2.3.

2.  The flame-retardant polyurethane resin composition according to claim 1, wherein the content of said flame retardant is 15% by mass or less with respect to the total amount of the flame-retardant polyurethane resin composition.

3.  The flame-retardant polyurethane resin composition according to claim 1, wherein said modified isocyanurate-type polyisocyanate compound contains a partially blocked isocyanurate-type polyisocyanate in which at least one of the isocyanate groups of the isocyanurate-type polyisocyanate is blocked with a monool.

4.  The flame-retardant polyurethane resin composition according to claim 3, wherein said monool is selected from the group consisting of monools having 6 to 12 carbon atoms and monools derived from castor oil.

5.  The flame-retardant polyurethane resin composition according to claim 1, wherein the content of said modified isocyanurate-type polyisocyanate compound is in the range of 60 to 100% by mass with respect to the total amount of the polyisocyanate component.

6.  The flame-retardant polyurethane resin composition according to claim 1, wherein said polyisocyanate component further comprises a diisocyanate compound.

7.  The flame-retardant polyurethane resin composition according to claim 6, wherein the ratio of the diisocyanate compound (a) to the modified isocyanurate-type polyisocyanate compound (b) in the polyisocyanate component is in the range of (a):(b) = 1:99 to 40:60 (molar ratio).

8.  The flame-retardant polyurethane resin composition according to claim 1, wherein the content of said modified isocyanurate-type polyisocyanate compound is 3 parts by mass or more per 100 parts by mass of the flame-retardant polyurethane resin composition.

9.  The flame-retardant polyurethane resin composition according to claim 1, wherein said polyisocyanate component comprises a modified isocyanurate-type polyisocyanate compound derived from plant-derived 1,5-pentamethylene diisocyanate.

10. The flame-retardant polyurethane resin composition according to claim 1, wherein said polyol component comprises a plant-derived polyol compound.

11. A flame-retardant polyurethane resin formulation for forming the flame-retardant polyurethane resin composition according to claim 1, which comprises a flame retardant and polyurethane resin raw material components containing a polyisocyanate component and a polyol component, wherein said polyisocyanate component comprises a modified isocyanurate-type polyisocyanate compound having an average number of isocyanate groups of 1.7 to 2.3.

12. The flame-retardant polyurethane resin formulation according to claim 11, in which the content of the flame retardant is 15% by mass or less with respect to the total amount of the flame-retardant polyurethane resin formulation.

13. A synthetic artificial leather comprising a support body and a surface skin layer, wherein at least the surface skin layer is composed of the flame-retardant polyurethane resin composition according to any one of claims 1 to 10.

14. The synthetic artificial leather according to claim 13, which is a vehicle interior material.

15. A method for producing a synthetic artificial leather comprising a support body and a surface skin layer, which comprises a process for forming a surface skin layer by laminating the flame-retardant polyurethane resin formulation according to claim 11 or 12 on the support body followed by heat treating.

## INTERNATIONAL SEARCH REPORT

| International application No. |
| --- |
| **PCT/JP2023/041553** |

| A. | CLASSIFICATION OF SUBJECT MATTER |
| --- | --- |

*C08G 18/79*(2006.01)i; *C08G 18/08*(2006.01)i; *C08G 18/28*(2006.01)i; *C08G 18/36*(2006.01)i; *C08G 18/72*(2006.01)i;
*D06N 3/14*(2006.01)i
FI: C08G18/79 010; C08G18/08 038; C08G18/28 015; C08G18/36; C08G18/72 010; D06N3/14 101; D06N3/14 102

According to International Patent Classification (IPC) or to both national classification and IPC

| B. | FIELDS SEARCHED |
| --- | --- |

Minimum documentation searched (classification system followed by classification symbols)

C08G18/79; C08G18/08; C08G18/28; C08G18/36; C08G18/72; D06N3/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-90038 A (SEKISUI CHEM. CO., LTD.) 13 June 2019 (2019-06-13) | 1-15 |
| A | JP 2022-22919 A (INOAC GIJUTSU KENKYUSHO KK) 07 February 2022 (2022-02-07) | 1-15 |
| A | JP 2016-98327 A (SANYU REC CO., LTD.) 30 May 2016 (2016-05-30) | 1-15 |
| A | JP 2008-101087 A (SUMIKA BAYER URETHANE KK) 01 May 2008 (2008-05-01) | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 January 2024** | **30 January 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2023/041553**

| Patent document cited in search report | | | Publication date (day/month/year) | Patent family member(s) | | | Publication date (day/month/year) |
|---|---|---|---|---|---|---|---|
| JP | 2019-90038 | A | 13 June 2019 | JP | 2014-193995 | A | |
| | | | | JP | 2017-75326 | A | |
| | | | | JP | 2018-90816 | A | |
| | | | | JP | 2019-206724 | A | |
| | | | | JP | 2020-73707 | A | |
| | | | | US | 2015/0322195 | A1 | |
| | | | | US | 2020/0255576 | A1 | |
| | | | | WO | 2014/112394 | A1 | |
| | | | | EP | 2947105 | A1 | |
| | | | | TW | 201439287 | A | |
| | | | | AU | 2014206423 | A | |
| | | | | CN | 104903370 | A | |
| | | | | KR | 10-2015-0108410 | A | |
| JP | 2022-22919 | A | 07 February 2022 | JP | 2022-13710 | A | |
| | | | | JP | 6888158 | B1 | |
| JP | 2016-98327 | A | 30 May 2016 | (Family: none) | | | |
| JP | 2008-101087 | A | 01 May 2008 | (Family: none) | | | |

Form PCT/ISA/210 (patent family annex) (July 2022)

**EP 4 636 004 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022056074 A
- JP 2019090038 A
- WO 2016010042 A
- JP 2022022919 A
- JP 2020063410 A
- JP 2017043667 A
- JP 2011226047 A
- JP 2019199498 A
- JP 2019199499 A
- WO 2019221090 A
- JP 2011241528 A
- WO 2015011921 A
- JP 2008101087 A